# EUROPÄISCHE PATENTANMELDUNG

(11) **EP 2 009 239 A2**
(43) Veröffentlichungstag der Anmeldung: **31.12.2008**
(21) Anmeldenummer: 08010394.8
(22) Anmeldetag: 06.06.2008
(51) Int. Cl.: F01D 5/14, B64C 21/04, F04D 29/68

(54) **Schaufel mit Tangentialstrahlerzeugung am Profil**

(30) Priorität: 26.06.2007 DE 102007029367
(71) Anmelder: Rolls-Royce Deutschland Ltd & Co KG, 15827 Blankenfelde-Mahlow (DE)
(72) Erfinder: Gümmer, Volker, 15831 Mahlow (DE)
(74) Vertreter: Weber, Joachim

(57) **Zusammenfassung**

Die Erfindung bezieht sich auf eine Strömungsarbeitsmaschinenschaufel mit zumindest einem in der Schaufel (1) angeordneten Hohlraum (2), welcher mit Mitteln zur Zufuhr von Fluid verbunden ist, sowie mit zumindest einer Auslassöffnung (3), welche den Hohlraum mit einem Strömungsweg verbindet, in welchem die Schaufel (1) angeordnet ist, dadurch gekennzeichnet, dass die Auslassöffnung (3) düsenartig ausgebildet und im Wesentlichen in Richtung einer längs einer zugeordneten Fläche der Schaufel (1) verlaufenden Hauptströmung geneigt ist, dass sich die Auslassöffnung (3) über zumindest einen Teil der Höhe der Schaufel (1) erstreckt, und dass die Auslassöffnung (3) einen Absatz in der Kontur des Profils der Schaufel (1) bildet, wobei sich ein aus der Auslassöffnung (3) austretender Fluidstrahl im Wesentlichen tangential an die Fläche anlegt.

## Beschreibung

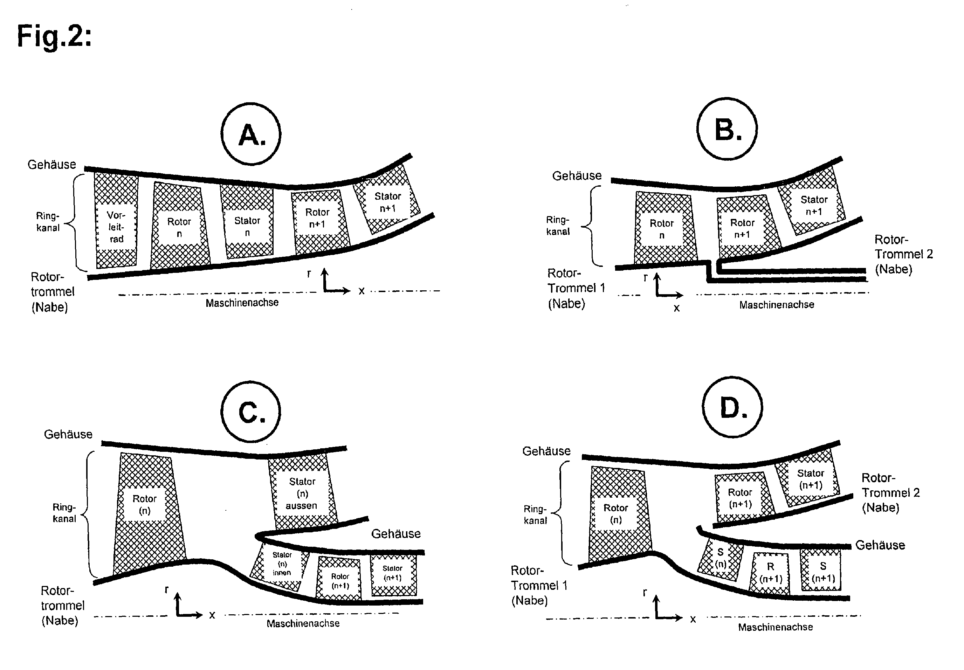

Die vorliegende Erfindung bezieht sich auf Schaufeln von Strömungsarbeitsmaschinen wie Bläser, Verdichter, Pumpen und Ventilatoren axialer, halbaxialer und radialer Bauart mit gasförmigem oder flüssigem Arbeitsmedium. Die Strömungsarbeitsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren. Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Fig. 2 zeigt beispielhaft vier mögliche Konfigurationen der Strömungsarbeitsmaschine.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im Wesentlichen der Oberflächenkühlung und nicht der Grenzschichtenergetisierung dienen.

Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Hierbei scheiterte die Verbesserung der Schaufelleistungswerte an einer angemessenen Positionierung und Gestaltung der Ausblasöffnungen. Verwandte Alternativlösungen sehen ein direktes Durchtreten des Fluides von der Schaufeldruckseite zur Schaufelsaugseite vor; auch hier wurden aufgrund einer ungünstig gewählten Geometrie der Durchtrittsöffnungen keine nennenswerte Steigerung der Schaufelleistungswerte erreicht. Daneben existiert für Rotoren ein Konzept zur Luftzufuhr an Nabe und Gehäuse durch in Umfangsrichtung der Maschine verlaufende Schlitze, um die dortigen Wandgrenzschichten zu beeinflussen.

Schließlich gibt es Konzepte, die vorsehen, dass Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen nur bedingt effektiv.

Der oben beschriebene Stand der Technik ist unter anderem in folgenden Veröffentlichungen dokumentiert:
US 5,690,473
US 6,334,753
US 2,870,957
US 2,933,238
US 5,480,284

Die Strömung in Schaufelreihen aerodynamisch hoch belasteter Strömungsarbeitsmaschinen ist gekennzeichnet durch eine sehr hohe zu erreichende Strömungsumlenkung. Die erforderliche Strömungsumlenkung kann entweder in Teilen der Schaufelhöhe oder entlang der gesamten Schaufelhöhe so hoch werden, dass ein konventionelle, nach dem Stand der Technik ausgeführte Gestalt der Schaufelprofilschnitte zu frühzeitiger Ablösung der Grenzschichtströmung auf dem Schaufelprofil und im Seitenwandbereich an Nabe und Gehäuse führt.

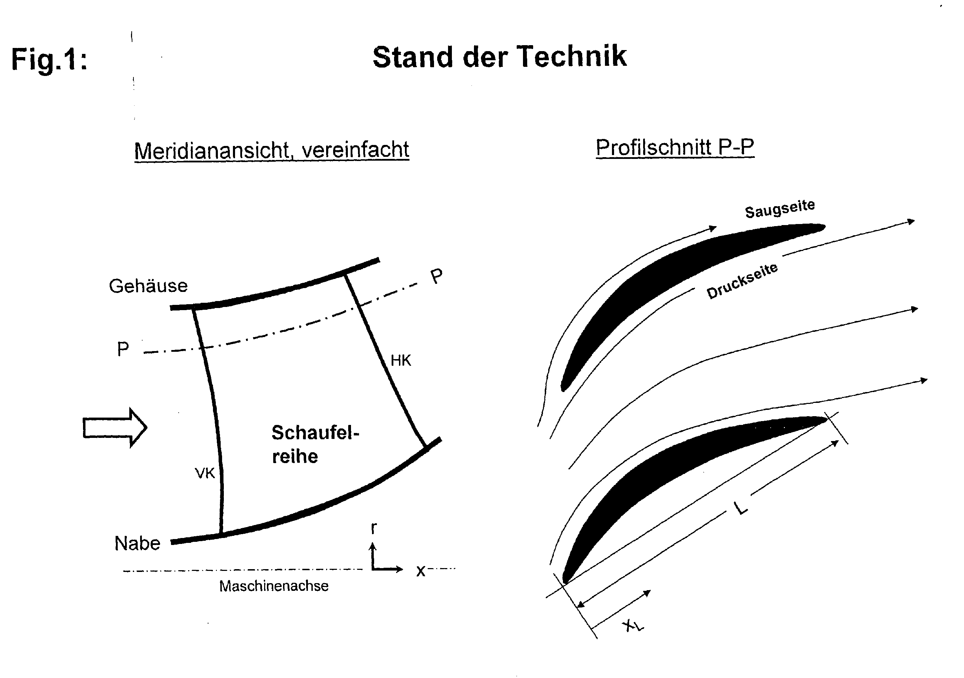

Übliche Schaufeln, wie sie in Fig.1 dargestellt sind, ohne zusätzliche Gestaltungsmerkmale zur Stabilisierung der Profil- und Wandgrenzschichten, sind aufgrund extrem hoher Druckverluste und der Nichterreichung der angestrebten Strömungsumlenkung ungeeignet. Die Konsequenz ist ein insgesamt schlechtes Leistungsverhalten der Strömungsarbeitsmaschine im Hinblick auf den Wirkungsgrad und die verfügbare Stabilitätsmarge.

Schaufelreihen mit einer Profilgestaltung nach dem Stand der Technik, siehe Fig.1, besitzen aufgrund der starken auftretenden aerodynamischen Belastung der Grenzschichten, im Besonderen der zweidimensionalen Grenzschichten auf dem Profil, einen zu geringen Arbeitsbereich und zu hohe Verluste, um die in modernen Strömungsarbeitsmaschinen erforderlichen Betriebskennwerte zu erbringen. Bisher vorgeschlagene Lösungen zur Fluidzufuhr auf die Oberflächen der Schaufel haben aufgrund ungünstig gewählter Abmessung, Form, Orientierung oder Positionierung des Auslasses nicht die angestrebte Wirkung gezeigt.

Der Erfindung liegt die Aufgabe zugrunde, eine Schaufel für eine Strömungsarbeitsmaschine der beschriebenen Art zu schaffen, welche sich unter Vermeidung der Nachteile des Standes der Technik durch einen hohen Wirkungsgrad auszeichnet.

Erfindungsgemäß wird die Aufgabe durch die Merkmalskombination des Hauptanspruchs gelöst, die Unteransprüche zeigen weitere vorteilhafte Ausgestaltungen der Erfindung.

Im Einzelnen umfasst die vorliegende Erfindung eine Stator- oder Rotor-Schaufelreihe einer Strömungsarbeitsmaschine, die die folgenden gemeinsamen Merkmale umfasst:
a.) mindestens einen Hohlraum, angeordnet im Inneren mindestens einer Schaufel der Schaufelreihe
b.) im Bereich mindestens einer Schaufel der Schaufelreihe mindestens einen Auslass, der mit einem besagten Hohlraum in Verbindung steht und auf einer von der Hauptströmung benetzten Oberfläche des Schaufelprofils (Schaufelsaugseite oder Schaufeldruckseite) angeordnet ist, wobei der Auslass konstruktiv so beschaffen ist, dass er in mindestens einer Betrachtungsschnittebene eine düsenartige, im Wesentlichen in Richtung der Hauptströmung geneigte Form besitzt, die Auslassöffnung auf diese Weise einen Absatz in der Kontur des Schaufelprofils bildet und ein aus der Auslassöffnung tretender Fluidstrahl sich infolge dieser Ausprägungen im Wesentlichen tangential an die betreffende Oberfläche anlegt.

Erfindungsgemäß ist für den Einsatz in einer Strömungsarbeitsmaschine eine hohle Schaufel geschaffen, die eine hohle Bauweise sowie mindestens einen speziell geformten Auslass zur Tangentialstrahlerzeugung auf mindestens einer ihrer Profilseiten aufweist, derart, dass Fluid aus einer Schaufelinnenkammer auf der Gesamtheit oder einem Teil der Kanalhöhe auf strömungsgünstige Weise auf die Schaufelaußenoberfläche austreten kann.

Weitere Beschreibung der Erfindung:
1. Eine Schaufelreihe, Stator- oder Rotor, für die Verwendung in einer Strömungsarbeitsmaschine, insbesondere in einem Flugtriebwerk, gekennzeichnet durch folgende Merkmale:
   a.) mindestens ein Hohlraum, angeordnet im Inneren mindestens einer Schaufel der Schaufelreihe und verbunden mit mindestens einem Strömungsweg, der dem Hohlraum Fluid zuführt
   b.) an mindestens einer Schaufel der Schaufelreihe mindestens ein Auslass, der mit einem besagten Hohlraum in Verbindung steht und auf mindestens einer von der Hauptströmung benetzten Oberfläche des Schaufelprofils, Saugseite oder Druckseite, angeordnet ist und dort der Hauptströmung Fluid zuführt, wobei der Auslass konstruktiv so beschaffen ist, dass er in mindestens einer Betrachtungsschnittebene eine düsenartige und im Wesentlichen in Richtung der Hauptströmung geneigte Form besitzt, sich über die Gesamtheit oder einen Teil der Ringkanalweite bzw. Schaufelhöhe erstreckt, seine Auslassöffnung einen Absatz in der Kontur des Schaufelprofils bildet und ein aus der Auslassöffnung tretender Fluidstrahl sich infolge dieser Ausprägungen im Wesentlichen tangential an die betreffende Oberfläche anlegt.
2. Schaufelreihe nach 1, wobei im Bereich des Auslasses oder auch im Bereich des Hohlraumes mindestens ein Trennsteg vorgesehen ist, der den herangeführten Fluidstrom unterteilt oder auch, ähnlich wie ein Schaufelgitter, umlenkt, bevor er als Tangentialstrahl auf die Schaufeloberfläche austritt.
3. Schaufelreihe nach 1 oder 2, wobei aufgrund der Gestaltung des Auslasses die Strahlrichtung am Ort der Auslassöffnung mit der Richtung der Haupt- bzw. Grenzschichtströmung am Schaufelprofil einen Scherwinkel ϕ einschließt, der Werte im Winkelbereich von -90° < ϕ < 90° aufweist.
4. Schaufelreihe nach einem der Punkte 1 bis 3, wobei die Gestalt des Auslasses wie folgt festgelegt ist:
   a.) der Engquerschnitt des Auslasses befindet sich an oder nahe der Auslassöffnung
   b.) der Auslass besitzt vom Engquerschnitt ins Innere der Schaufel gehend eine über der gesamten effektiven Länge k kontinuierlich steigende Querschnittsweite, entsprechend einer(Düsenförmigkeit zwischen den Anfangs- und Endkreismittelpunkten MI und ME
   c.) die effektive Länge k, bezogen auf die Engquerschnittsweite e, liegt im Wertebereich k/e > 0,7
   d.) der zwischen den Tangenten TGO und TGA eingeschlossene Mündungswinkel γ liegt im Wertebereich 0° < γ < 60°
   e.) die Absatzhöhe f, bezogen auf die Engquerschnittsweite e, liegt im Wertebereich 0 < f/e < 3
5. Schaufelreihe nach einem der Punkte 1 bis 4, wobei mindestens ein Auslass zur Tangentialstrahlerzeugung besonders wirksam im Bereich der relativen Profiltiefe 0,5 < Pr < 0,85 auf der Schaufelsaugseite vorgesehen ist.
6. Schaufelreihe nach einem der Punkte 1 bis 4, wobei mindestens ein Auslass zur Tangentialstrahlerzeugung besonders wirksam im Bereich der relativen Profiltiefe 0,1 < Pr < 0,4 auf der Schaufeldruckseite vorgesehen ist.
7. Schaufelreihe nach einem der Punkte 1 bis 4, dadurch gekennzeichnet, dass mindestens ein Auslass zur Tangentialstrahlerzeugung besonders wirksam im Bereich der relativen Profiltiefe 0,8 < Pr < 1,0 auf der Schaufelsaugseite vorgesehen ist.
8. Schaufelreihe nach einem der Punkte 1 bis 4, dadurch gekennzeichnet, dass mindestens ein Auslass zur Tangentialstrahlerzeugung besonders wirksam im Bereich der relativen Profiltiefe 0,5 < Pr < 0,85 auf der Schaufeldruckseite vorgesehen ist.
9. Schaufelreihe nach einem der Punkte 1 bis 4, dadurch gekennzeichnet, dass mindestens ein Auslass zur Tangentialstrahlerzeugung auf der Schaufelsaugseite und gleichzeitig mindestens ein Auslass zur Tangentialstrahlerzeugung auf der Schaufeldruckseite vorgesehen ist.
10. Schaufelreihe nach Punkt 9, dadurch gekennzeichnet, dass mindestens ein Auslass saugseitig im Bereich der relativen Profiltiefe 0,5 < Pr < 0,85 und mindestens ein Auslass druckseitig im Bereich der relativen Profiltiefe 0,1 < Pr < 0,4 vorgesehen ist.
11. Schaufelreihe nach Punkt 9, dadurch gekennzeichnet, dass mindestens ein Auslass saugseitig im Bereich der relativen Profiltiefe 0,8 < Pr < 1,0 und mindestens ein Auslass druckseitig im Bereich der relativen Profiltiefe 0,5 < Pr < 0,85 vorgesehen ist.
12. Schaufelreihe nach einem der Punkte 1 bis 4, dadurch gekennzeichnet, dass mindestens zwei Auslässe zur Tangentialstrahlerzeugung auf der Schaufelsaugseite in Strömungsrichtung hintereinander vorgesehen sind.
13. Schaufelreihe nach einem der Punkte 1 bis 4, dadurch gekennzeichnet, dass mindestens zwei Auslässe zur Tangentialstrahlerzeugung auf der Schaufeldruckseite in Strömungsrichtung hintereinander vorgesehen sind.
14. Schaufelreihe nach einem der Punkte 1 bis 13, dadurch gekennzeichnet, dass komplementär zu einer vorgesehenen Tangentialstrahlerzeugung mindestens ein weiterer Auslass im Bereich der Profilhinterkante angeordnet ist, der aufgrund seiner Orientierung eine nicht-tangential zur Profilumströmung ausgerichtete Strahlerzeugung bewirkt.
15. Schaufelreihe nach Punkt 14, dadurch gekennzeichnet, dass mindestens ein besagter Komplementärauslass besonders wirksam im Bereich der relativen Profiltiefe 0,9 < Pr < 1,0 auf der Schaufeldruckseite vorgesehen ist.
16. Schaufelreihe nach Punkt 14 oder 15, dadurch gekennzeichnet, dass die Gestalt des Komplementärauslasses wie folgt festgelegt ist:
   a.) der Engquerschnitt des Auslasses befindet sich an oder nahe der Auslassöffnung
   b.) der Auslass besitzt vom Engquerschnitt ins Innere der Schaufel gehend eine über der gesamten effektive Erstreckung s kontinuierlich steigende Querschnittsweite (Düsenförmigkeit zwischen den Anfangs- und Endkreismittelpunkten MI und ME)
   c.) die effektive Erstreckung s, bezogen auf die Engquerschnittsweite e, liegt im Wertebereich s/e > 0,7 d.) Der zwischen den Tangenten TGO und TGA eingeschlossene Mündungswinkel gamma liegt im Wertebereich 45° < gamma < 135°.
   e.) die Hinterkantenvorsprungtiefe j, bezogen auf die Engquerschnittsweite e, liegt im Wertebereich 0 < j/e < 10
17. Schaufelreihe nach einem der Punkte 1 bis 16, dadurch gekennzeichnet, dass mindestens ein Auslass auf der betroffenen Schaufeloberfläche eine Trajektorie besitzt, die durchgängig oder in Abschnitten mit der Kante des Auslassabsatzes übereinstimmt (Linienausrichtung).
18. Schaufelreihe nach einem der Punkte 1 bis 16, dadurch gekennzeichnet, dass mindestens ein Auslass auf der betroffenen Schaufeloberfläche eine Trajektorie besitzt, die nur punktuell die Kante gedreht angeordneter Öffnungen berührt (gedrehte Ausrichtung).
19. Schaufelreihe nach Punkt 17 oder 18, dadurch gekennzeichnet, dass mindestens ein Auslass entlang der Trajektorie mehrere durch Unterteilung entstandene Teilöffnungen umfasst, die rundlochartig, langlochartig, eckig oder schlitzartig ausgebildet sind und hinsichtlich Abstand und Form variabel gestaltet sein können.
20. Schaufelreihe nach einem der Punkte 1 bis 19, dadurch gekennzeichnet, dass bei gezieltem Aktivieren und Deaktivieren der Fluidversorgung mindestens eines Auslasses eine Steuerbarkeit der Abströmrichtung der Schaufelreihe mit einem Variationsbereich des Abströmwinkels von mehr als 5 Grad in mindestens einem Teilbereich der Ringkanalweite bzw. Schaufelhöhe erzielt wird.
21. Schaufelreihe nach einem der Punkte 1 bis 20, dadurch gekennzeichnet, dass es sich hierbei um die erste Statorreihe hinter dem Fan (Bläser) eines Flugtriebwerkes im Kern- oder Nebenstrom handelt.
22. Schaufelreihe nach einem der Punkte 1 bis 20, dadurch gekennzeichnet, dass es sich hierbei um eine Statorreihe eines mehrstufigen Hoch- oder Mitteldruckverdichters eines Flugtriebwerkes handelt.
23. Schaufelreihe nach Punkt 21 oder 22, dadurch gekennzeichnet, dass in Ringkanalmitte die Profiltiefe des Stators die Profiltiefe eines unmittelbar stromab oder stromauf befindlichen Rotors um mindestens 20% überschreitet.
24. Schaufelreihe nach einem der Punkte 1 bis 23, dadurch gekennzeichnet, dass das Verhältnis von Ringkanalweite an der Schaufelvorderkante zu Profiltiefe in Ringkanalmitte kleiner 1 ist.

Im Folgenden wird die Erfindung anhand von Ausführungsbeispielen in Verbindung mit den Figuren beschrieben. Dabei zeigt:
- Fig. 1: die schematische Darstellung einer Schaufel nach dem Stand der Technik,
- Fig. 2: mögliche Konfigurationen erfindungsrelevanter Strömungsarbeitsmaschinen,
- Fig. 3: die Definition von Meridianstromlinien und Stromlinienprofilschnitten,
- Fig. 4a: Beispiel einer erfindungsgemäßen Schaufel,
- Fig. 4b: weiteres Beispiel einer erfindungsgemäßen Schaufel,
- Fig. 5a: Definition des erfindungsgemäßen Auslasses, Zielrichtung des Tangentialstrahls,
- Fig. 5b: Definition des erfindungsgemäßen Auslasses, Betrachtung in einer freien Schnittebene, Düsenform,
- Fig. 5c: Definition des erfindungsgemäßen Auslasses, Betrachtung in einer freien Schnittebene, Übergang zur Oberfläche,
- Fig. 5d: Definition des erfindungsgemäßen Auslasses, Betrachtung in einer freien Schnittebene, mit Trennsteg oder Umlenkhilfe,
- Fig. 6a: Profilbelastungsverteilung und Definition erfindungsgemäßer Auslasspositionen, Teil 1,
- Fig. 6b: Profilbelastungsverteilung und Definition erfindungsgemäßer Auslasspositionen, Teil 2,
- Fig. 6c: Profilbelastungsverteilung und Definition erfindungsgemäßer Auslasspositionen, Teil 3,
- Fig. 7: Beispiele erfindungsgemäßer Auslässe,
- Fig. 8a: Beispiele einer erfindungsgemäßen Schaufel im Stromlinienprofilschnitt mit Auslass in den Zonen A und E,
- Fig. 8b: Beispiele einer erfindungsgemäßen Schaufel im Stromlinienprofilschnitt mit Auslass in den Zonen A und B,
- Fig.: 8c Beispiel einer erfindungsgemäßen Schaufel im Stromlinienprofilschnitt mit Auslass in den Zonen A, B und E,
- Fig.: 8d Beispiele einer erfindungsgemäßen Schaufel im Stromlinienprofilschnitt mit Auslass in den Zonen A und C,
- Fig.: 8e Beispiel einer erfindungsgemäßen Schaufel im Stromlinienprofilschnitt mit Auslass in den Zonen A, B und C,

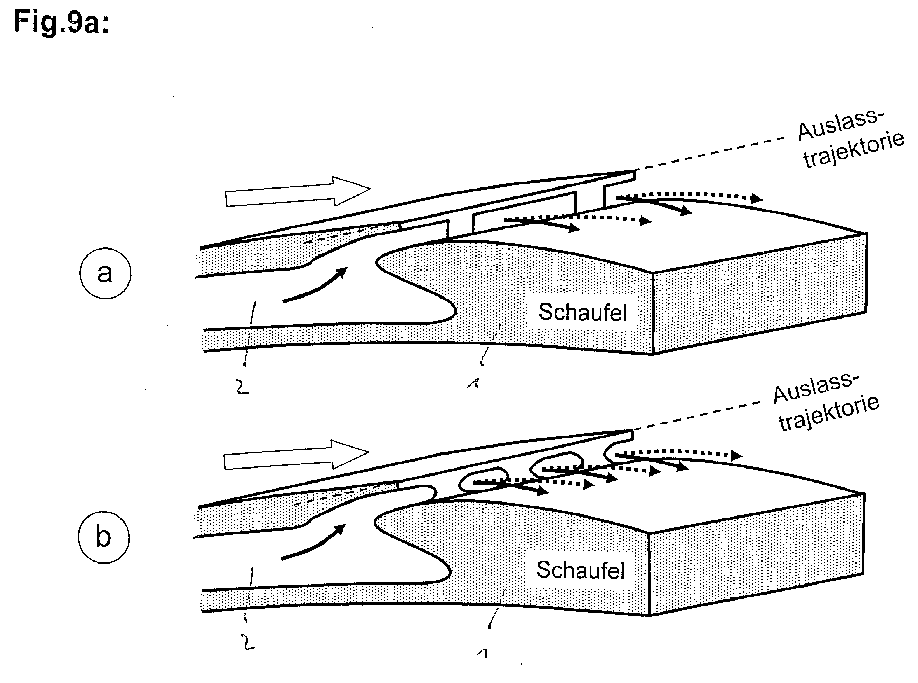

- Fig. 9a: Erfindungsgemäße Gestaltung des Auslasses in Kanalweitenrichtung, Zonen A, B, C, D, Linienausrichtung,

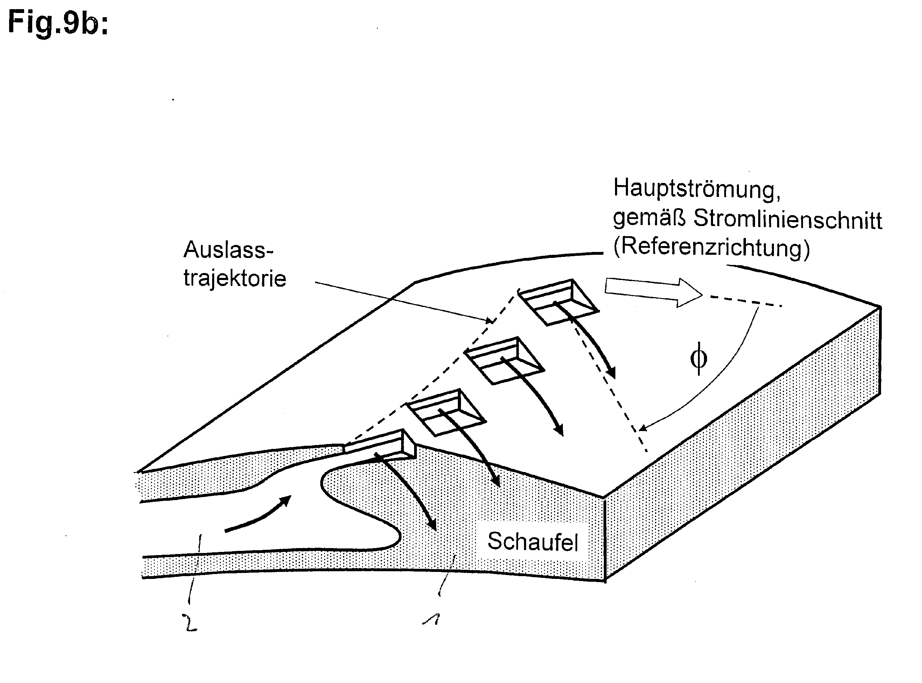

- Fig. 9b: Erfindungsgemäße Gestaltung des Auslasses in Kanalweitenrichtung, Zonen A, B, C, D, gedrehte Ausrichtung,

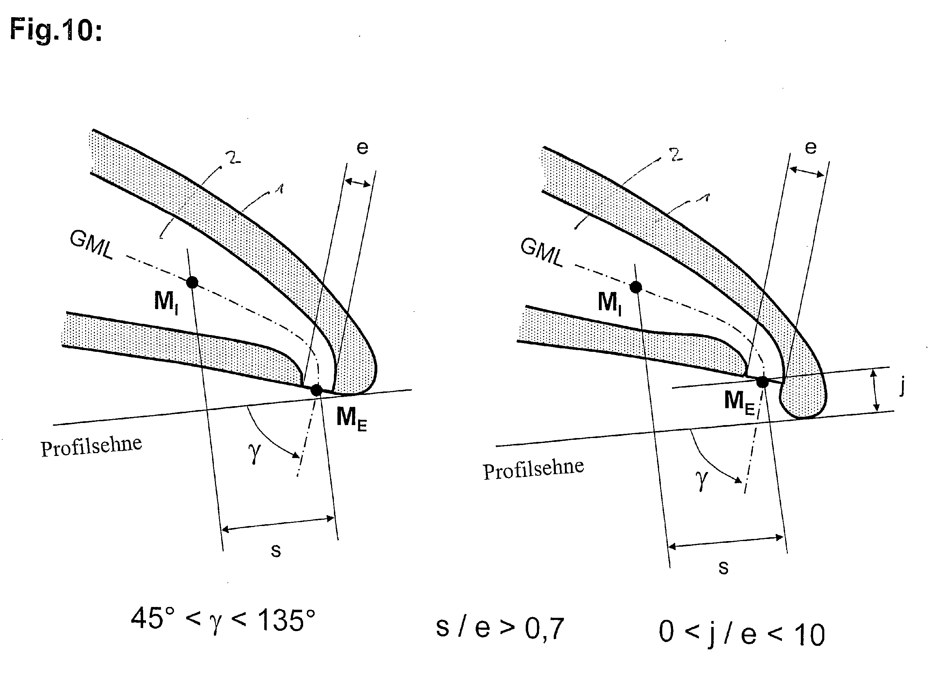

- Fig. 10: Erfindungsgemäße Gestaltung des Auslasses in Zone E, Betrachtung in einer freien Schnittebene, Düsenform,

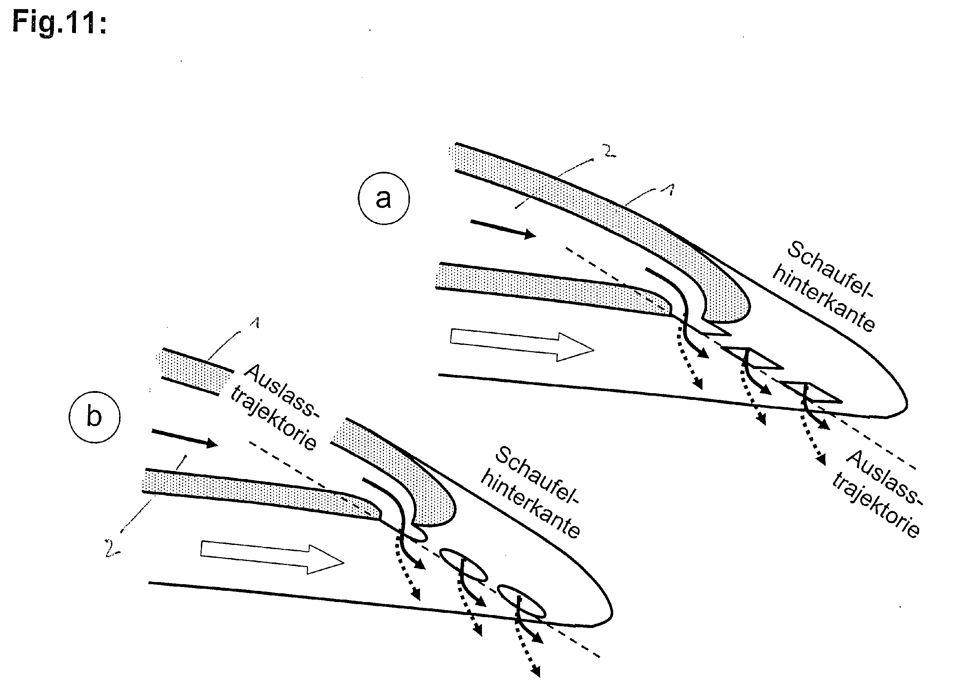

- Fig. 11: Erfindungsgemäße Gestaltung des Auslasses in Kanalweitenrichtung, Zone E.

Eine konventionelle Schaufel nach dem Stand der Technik, wie sie in Fig.1 gezeigt ist, besitzt keine über einem ausgewählten Teil der Schaufelhöhe vorgesehenen düsenförmigen Auslässe mit Absatz zur Erzeugung eines Tangentialstrahls. Die rechte Seite der Fig.1 zeigt vereinfacht eine Rotor- oder Statorschaufelreihe im Meridianschnitt mit Anströmung von links nach rechts (dicker Pfeil). Bei konventionellen Schaufeln verläuft die Strömung um die einzelnen Profilschnitte der Schaufeln (siehe Stromlinienprofilschnitt P-P) bei mäßig großer Umlenkung und ohne Beeinflussung auf dem Weg von der Vorderkante zur Hinterkante. Im rechten unteren Teil des Bildes sind die Profiltiefe des Profils L und die in diese Richtung weisende Koordinate xL definiert.

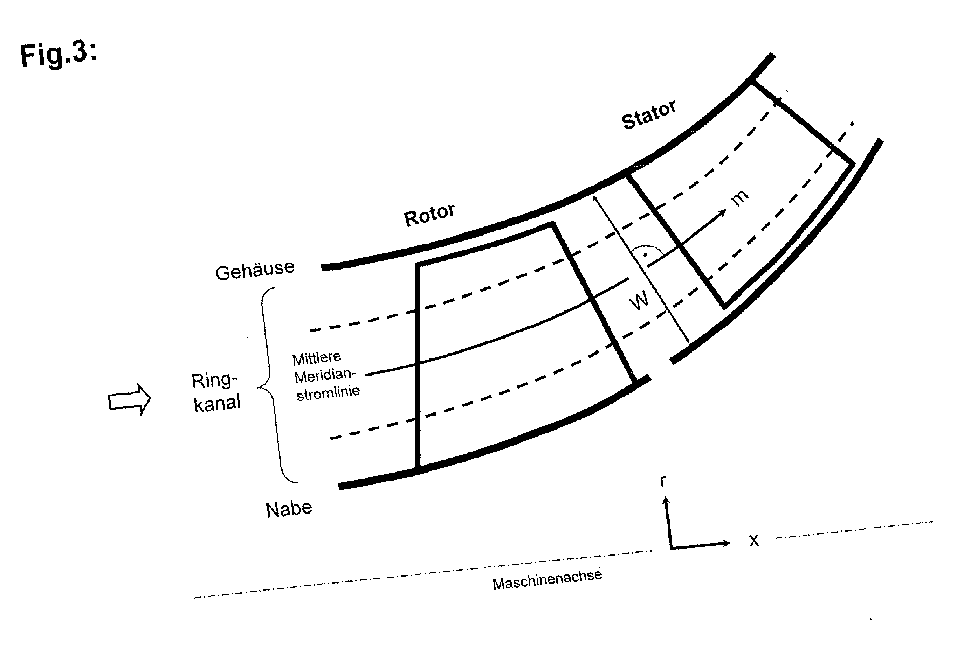

Erfindungsgemäße Festlegungen zur Form und Anordnung von Auslässen werden im Weiteren geschildert, zunächst jedoch bedarf es der grundsätzlichen Definition von Hilfsgrößen. Fig.3 gibt eine Definition der Meridianstromlinien und der Stromlinienprofilschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich durch gleiche relative Unterteilung der Normalen in Richtung der Ringkanalweite weitere Meridianstromlinien ermitteln lassen. Der Schnitt einer Meridianstromlinie mit einer Schaufel ergibt einen Stromlinienprofilschnitt.

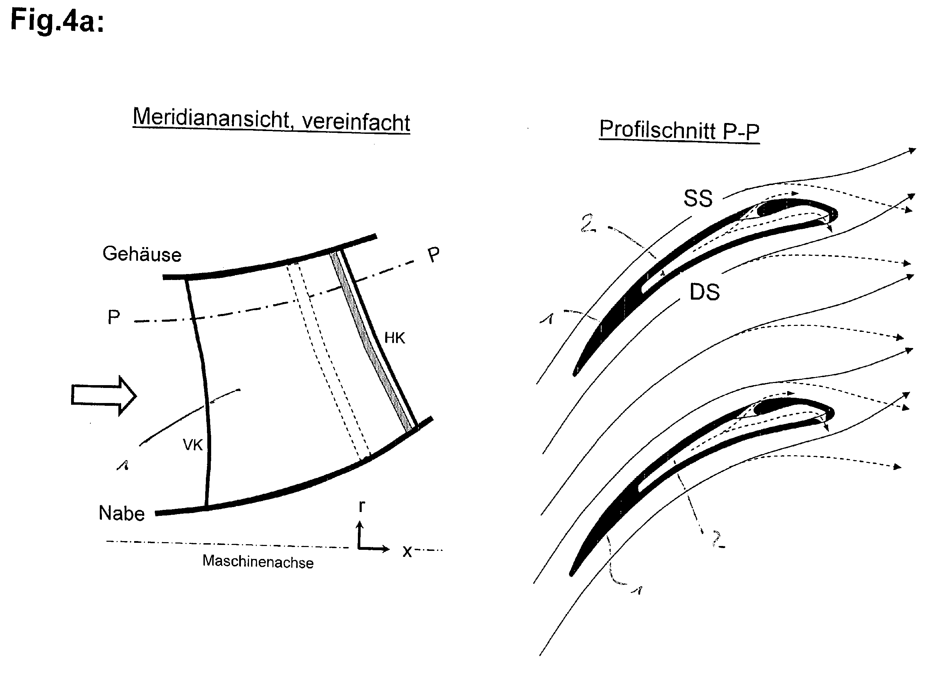

Die Fig.4a zeigt das Beispiel einer erfindungsgemäßen Schaufel. Auch hier ist die Schaufel im Meridianschnitt mit Anströmung von links nach rechts (linker Bildteil) und in einem ausgewählten Stromlinienprofilschnitt P-P (rechter Bildteil) dargestellt. Die Schaufel weist in der gezeigten Darstellung zwei Auslässe auf, die sich in der vorliegenden Darstellung über die gesamte Schaufelhöhe erstrecken, aber auch abweichend von dieser Darstellung jeweils nur in einem ausgewählten Teilbereich der Schaufelhöhe (Ringkanalweite W) angeordnet sein können. Erfindungsgemäß besitzt der saugseitige Auslass eine in Hauptströmungsrichtung geneigte, düsenartige Form und erzeugt einen im Wesentlichen sich tangential an die Profiloberfläche anlegenden Fluidstrahl. Die Auslassöffnung ist Teil eines sich zwangsläufig ausbildenden lokalen Absatzes in der Profilkontur. Der Fluidstrahl sorgt in dem hier betrachteten Beispiel für eine weiterhin nicht abgelöste Profilgrenzschichtströmung auf der Saugseite mit der Konsequenz einer deutlich höheren möglichen Strömungsumlenkung. In Verbindung mit dem saugseitigen Auslass kann erfindungsgemäß, wie in Fig.4a dargestellt, zusätzlich im unmittelbaren Hinterkantenbereich des Profils ein weiterer Auslass angeordnet sein, der eine im wesentlichen nicht-tangential zur Profiloberfläche ausgerichtete Strahlerzeugung vorsieht. Bei erfindungsgemäßer, besonders abgestimmter Ausführung und Positionierung der vorgesehenen Auslässe und bei gezieltem Aktivieren/Deaktivieren mindestens einer der Auslässe ergibt sich eine Steuerbarkeit der Abströmrichtung der Schaufelreihe mit einem Variationsbereich des Abströmwinkels von mehr als 5 Grad. Das eingezeichnete Stromlinienbild um das Profil zeigt dies für den Fall eines nicht aktiven Auslasses (durchgezogenen Linien) und den Fall eines aktiven Auslasses (gestrichelte Linien).

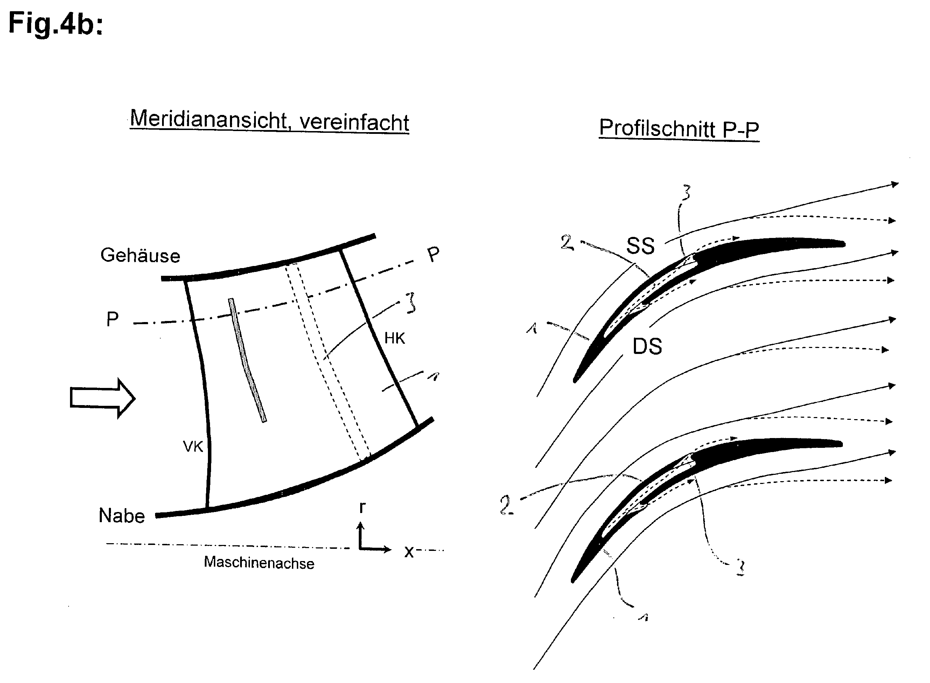

Die Fig.4b zeigt ein weiteres Beispiel einer erfindungsgemäßen Schaufel, hier mit anderer Profilgestalt und jeweils einem Auslass zur Tangentialstrahlerzeugung auf der Saug- und auf der Druckseite der Schaufel. Erfindungsgemäß kann sich jeder Auslass über nur einen Teil der Schaufelhöhe erstrecken, hier beispielhaft darstellt für den druckseitigen Auslass. Auch hier findet sich die Funktionalität der Abströmwinkelsteuerung bei Aktivierung/Deaktivierung des Auslasses.

In Fig.4a und Fig.4b ist der erfindungsgemäße Auslass nur schematisch dargestellt und auch die erfindungsgemäß vorgesehene Richtung des vom Auslass ausgehenden Fluidstrahls ist nicht vollständig erkennbar.

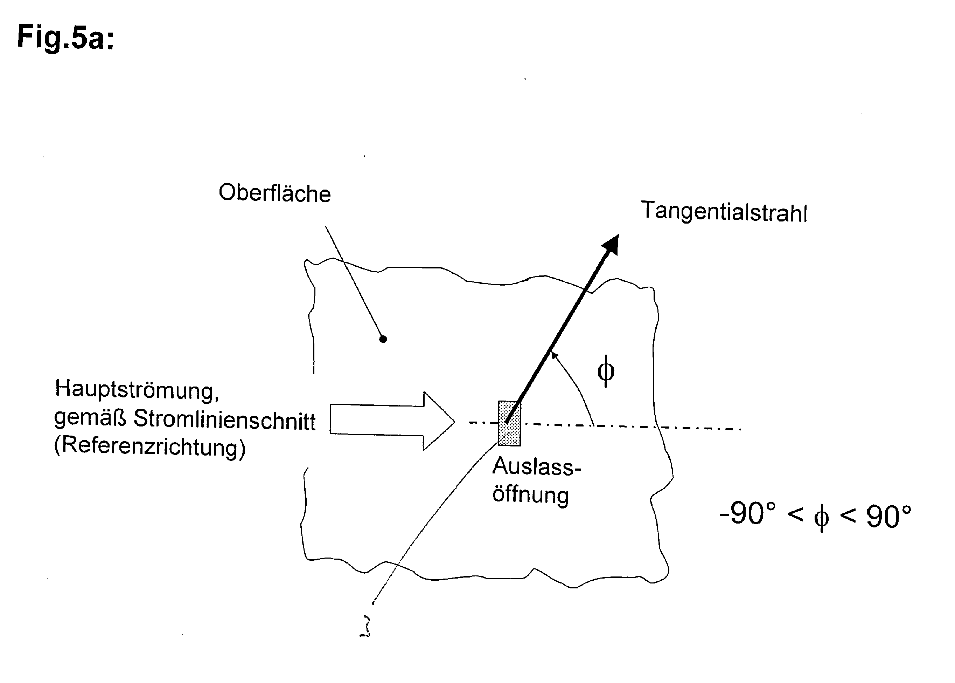

Die Fig.5a zeigt die Sicht auf die saug- oder druckseitige Oberfläche der Schaufel sowie die Richtung der auf den Auslass zulaufenden Hauptströmung bzw. deren Grenzschicht in unmittelbarer Nähe des Profils. Die Hauptströmung verläuft (gemäß der Definition in Fig. 3) in der Ebene eines Stromlinienschnittes. Der aus dem Auslass tretende Strahl legt sich erfindungsgemäß tangential an die Schaufeloberfläche an. Die Strahlrichtung muss jedoch nicht parallel zur herannahenden Haupt- bzw. Grenzschichtströmung sein, sondern ist an der Austrittsstelle erfindungsgemäß um den Scherwinkel ϕ in einem Winkelbereich von -90° < ϕ < 90° gegen diese Referenzrichtung geneigt. Der Scherwinkel ϕ ist erfindungsgemäß durch die Gestalt des Auslasses oder durch zusätzliche innerhalb des Auslasses vorgesehenen Umlenkhilfen bestimmt.

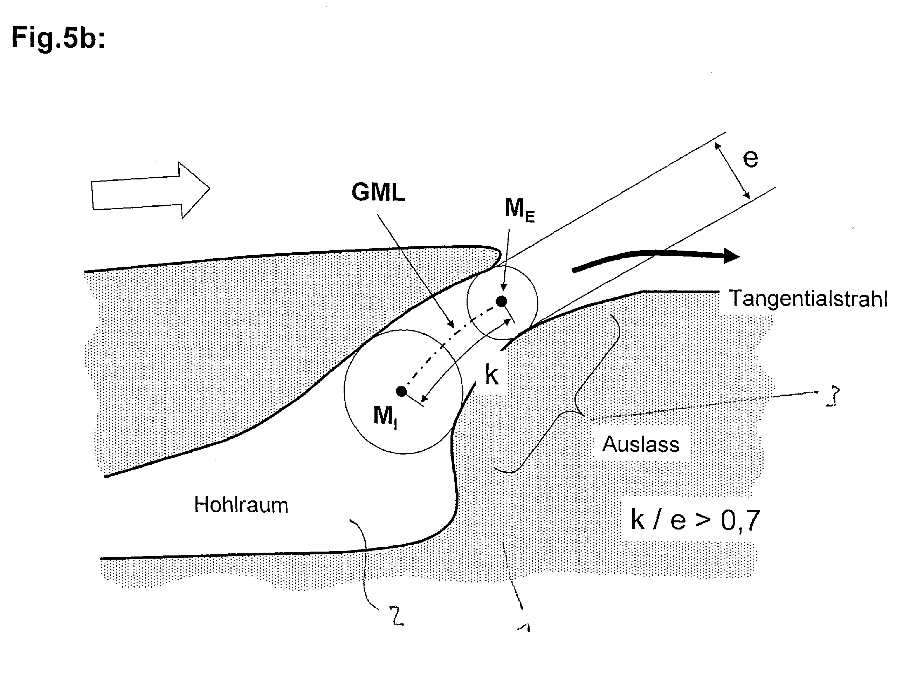

Die Fig.5b zeigt in einer frei festlegbaren Schnittebene durch die Schaufel die Merkmale des erfindungsgemäßen Auslasses. Die Merkmale des Auslasses werden mit Hilfe von zwei einbeschriebenen Kreisen und der Mittellinie des Auslasses in der einen hier betrachteten Ebene beschrieben. Zunächst wird von außerhalb der Schaufel kommend der engste Querschnitt des Auslasses gefunden. Der engste Querschnitt hat die Weite e, muss aber nicht, wie hier dargestellt, direkt an der Austrittsöffnung des Auslasses liegen. Der Mittelpunkt des im engsten Querschnitt gefundenen Kreises ist mit ME gekennzeichnet. Weiter in den Auslass hineingehend können zur Bestimmung der Mittellinie GML des Auslasses weitere kontinuierlich größer werdende Kreise einbeschrieben werden. Entlang der Mittellinie GML wird die effektive Länge k des Auslasses gemessen, die weiter im Inneren der Schaufel durch den Mittelpunkt MI eines letzten einbeschriebenen Kreises begrenzt wird.

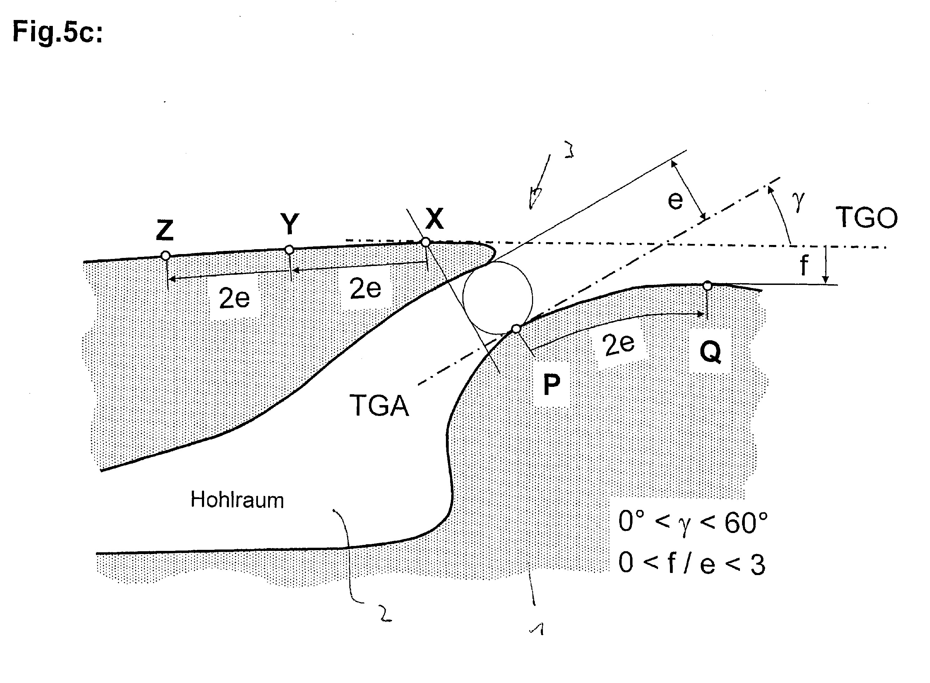

Die Fig.5c zeigt in einer frei festlegbaren Schnittebene durch die Schaufel die Merkmale des erfindungsgemäßen Auslasses, ähnlich wie Fig. 5b, nur mit neuen Bezeichnungen. Weitere erfindungsgemäße Merkmale des Auslasses hinsichtlich seines Überganges zur Oberfläche sind hier dargestellt. Wie bereits in Fig.5b besitzt der Engquerschnitt des Auslasses die Weite e. Der Berührpunkt des in den Engquerschnitt einbeschriebenen Kreises mit der inneren, an dieser Stelle konvexen Begrenzungskontur des Auslasses ist mit P bezeichnet. Die Tangente TGA sowie die Tangente TGO dienen hier zur Beschreibung des Übergangs des Auslasses in die Oberfläche der Schaufel. TGA ist die Tangente im Punkt P an die innere Auslassbegrenzungskontur. TGO ergibt sich als Tangente an einen Kreis (der nicht im Bild gezeigt ist) durch die Schaufeloberflächenpunkte X, Y und Z. Den Punkt X erhält man als Schnittpunkt einer tangential an den Engquerschnitt befindlichen Kreis angelegten Orthogonalen auf TGA. Der Punkt Y befindet sich in einem entlang der Schaufelaußenkontur gemessenen Abstand von zwei Engquerschnittsweiten (2e) stromauf von Punkt X. Der Punkt Z befindet sich in einem entlang der Schaufelaußenkontur gemessenen Abstand von zwei Engquerschnittsweiten (2e) stromauf von Punkt Y.

Von Bedeutung ist ebenfalls die Absatzhöhe f, die als orthogonaler Abstand des Punktes Q von der Tangente TGO gemessen wird. Der Punkt Q befindet sich zwei Engquerschnittsweiten (2e) stromab von Punkt P.

Für die Gestalt des Auslasses gelten schließlich erfindungsgemäß folgende Festlegungen:
a.) der Engquerschnitt des Auslasses befindet sich an oder nahe der Auslassöffnung
b.) der Auslass besitzt vom Engquerschnitt ins Innere der Schaufel gehend eine über der gesamten effektiven Länge k kontinuierlich steigende Querschnittsweite (Düsenförmigkeit zwischen den Anfangs- und Endkreismittelpunkten MI und ME)
c.) die effektive Länge k, bezogen auf die Engquerschnittsweite e, liegt im Wertebereich k/e > 0,7
d.) der zwischen den Tangenten TGO und TGA eingeschlossene Mündungswinkel γ liegt im Wertebereich 0° < γ < 60°
e.) die Absatzhöhe f, bezogen auf die Engquerschnittsweite e, liegt im Wertebereich 0 < f/e < 3

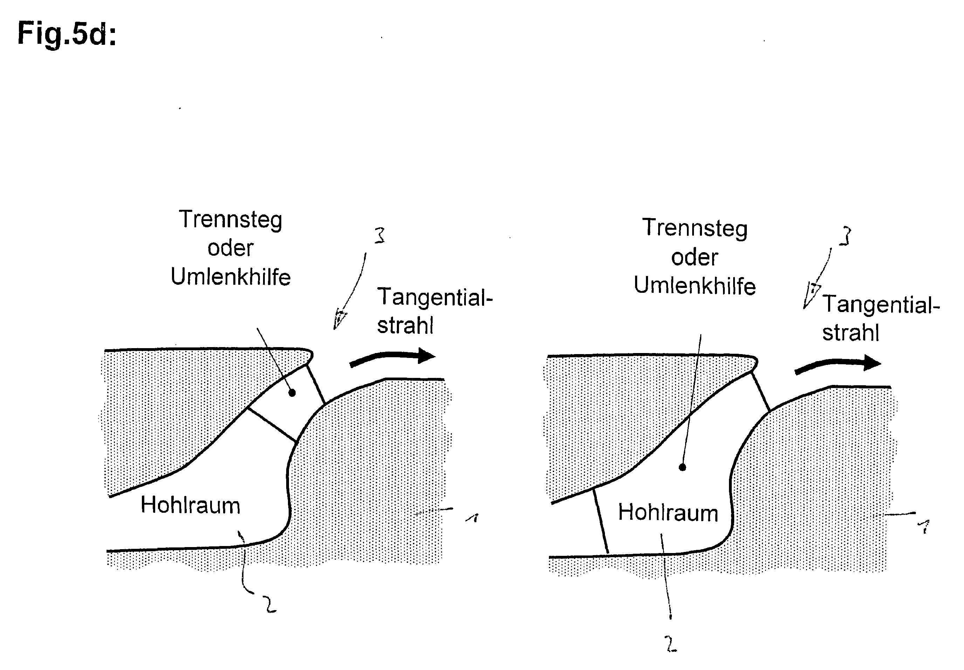

Die Fig.5d zeigt einen Auslass mit zusätzlichen Gestaltungselementen. In besonderer erfindungsgemäßer Ausführung kann im Bereich des Auslasses oder auch im Bereich des Hohlraumes mindestens ein Trennsteg vorgesehen sein, der den herangeführten Fluidstrom unterteilt oder auch ähnlich wie ein Schaufelgitter umlenkt, bevor er als Tangentialstrahls auf die Schaufeloberfläche austritt.

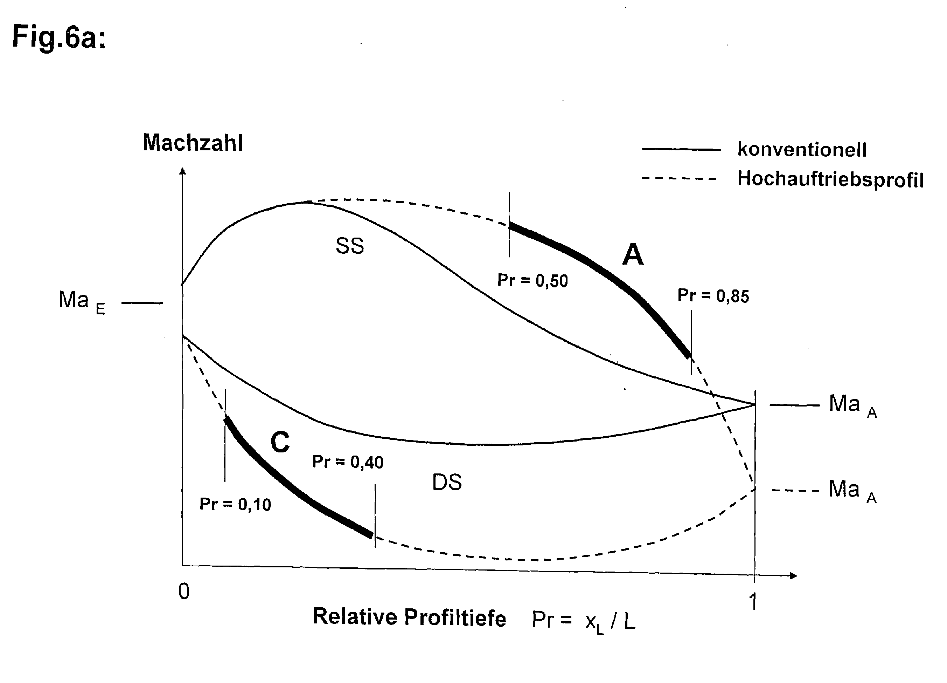

Neben der Gestalt des Auslasses ist insbesondere seine Position auf der Saugseite SS oder Druckseite DS von Bedeutung. Die Fig.6a zeigt schematisch die Machzahlverteilung, aufgetragen über der relativen Profiltiefe Pr=xL/L (Definition siehe Fig.1), entlang der zwei Profilseiten eines Schaufelschnitts. Die durchgezogenen Linien zeigen den Verlauf für ein konventionell nach dem Stand entworfenes Profil. Auch ein solches Profil lässt sich erfindungsgemäß bezüglich seiner Betriebskennwerte durch Anordnung eines Auslasses auf einer der Profilseiten verbessern. Es ist jedoch besonders günstig, wenn ein deutlich höher belastetes Profil mit einem oder mehreren Auslässen versehen wird. Ein derartiges Hochauftriebsprofil leistet insgesamt eine stärkere Verzögerung der Strömung (zwischen Eintrittsmachzahl MaE und Austrittsmachzahl MaA) und besitzt demzufolge eine schwieriger zu beherrschende Grenzschichtströmung auf beiden Seiten des Profils. Der Machzahlverlauf auf der Druck- und Saugseite eines möglichen Hochauftriebsprofils ist in Fig.6a mit gestrichelten Linien ebenfalls eingezeichnet. In der gewählten Ausführung besitzt das Profil stärke Verzögerung im hinteren Teil der Saugseite und im vorderen Teil der Druckseite, in denen die Anordnung eines Auslasses mit Tangentialstrahlerzeugung besonders wirksam ist. Erfindungsgemäß ist daher eine Positionierung mindestens eines Auslasses in mindestens einem der markierten Bereiche A, d.h. saugseitig im Bereich 0,5 < Pr < 0,85 oder C, d.h. druckseitig im Bereich 0,1 < Pr < 0,4, vorgesehen.

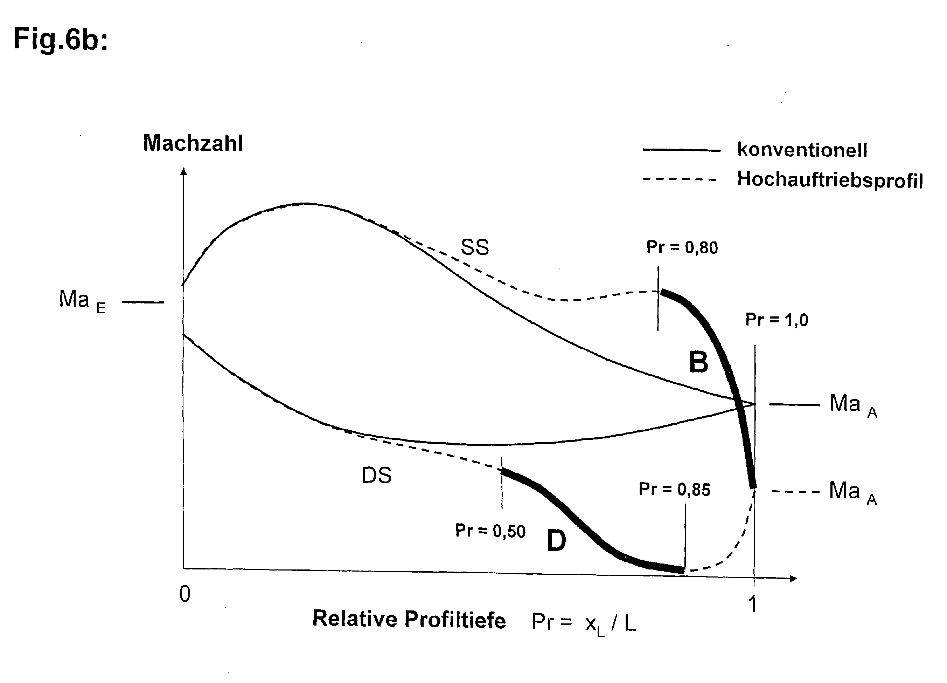

In Fig.6b besitzt das gewählte Profil stärke Verzögerung im hinterkantennahen Teil der Saugseite und im hinteren Teil der Druckseite, in denen die Anordnung eines Auslasses mit Tangentialstrahlerzeugung besonders wirksam ist. Erfindungsgemäß ist daher eine Positionierung mindestens eines Auslasses in mindestens einem der markierten Bereiche B, d.h. saugseitig im Bereich 0,8 < Pr < 1,0 oder D, d.h. druckseitig im Bereich 0,5 < Pr < 0,85, vorgesehen.

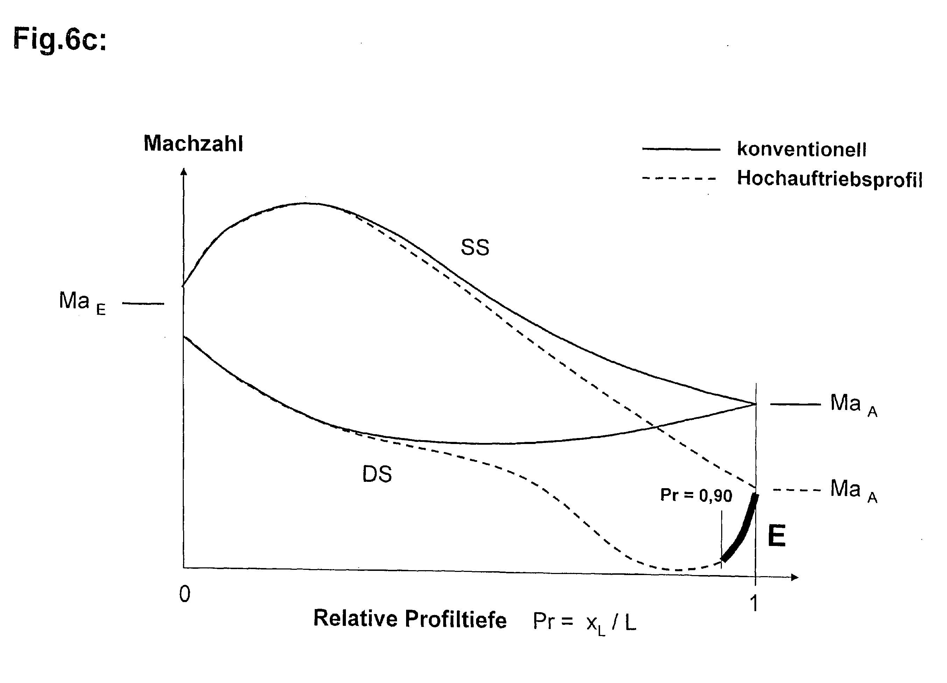

In Fig.6c besitzt das gewählte Profil stärke Verzögerung im hinterkantennahen Teil der Druckseite, die in der skizzierten Form nur durch einen nicht-tangentialen Strahl, druckseitig möglichst nahe der Hinterkante angeordnet und unter steilem Winkel zur Profilumströmung ausgerichtet, erzielt werden kann. Erfindungsgemäß kann daher zur besonders günstigen Gestaltung der Schaufel als Komplementärmaßnahme zu jeglicher Auslassanordnung in den Bereichen A, B, C und D ein Auslass zur Erzeugung eines nicht-tangentialen Strahls im markierten Bereich E, d.h. druckseitig im Bereich 0,9 < Pr < 1,0, vorgesehen sein.

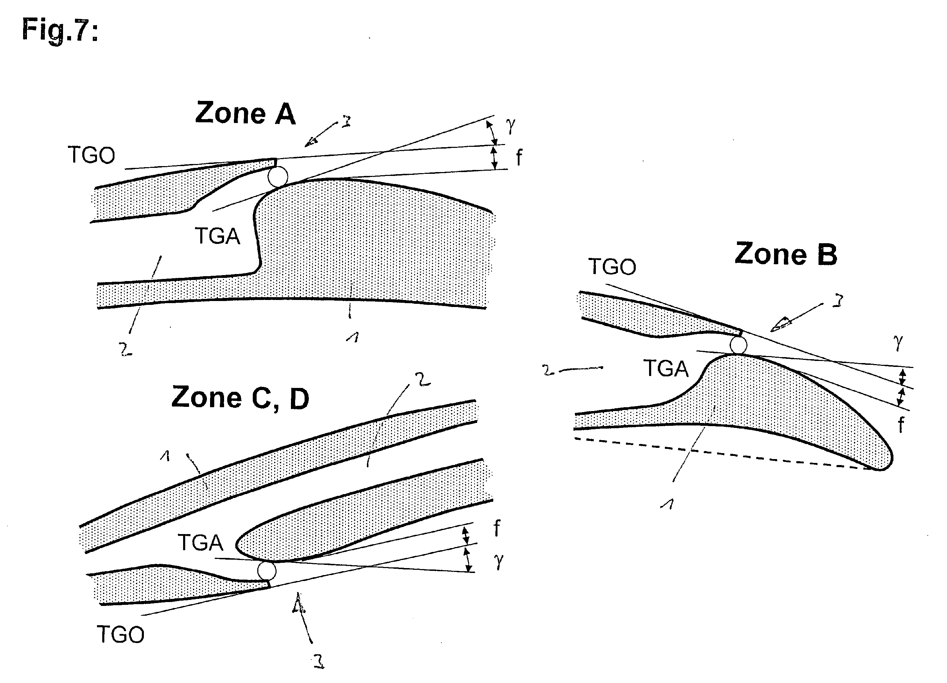

Die Fig.7 zeigt Beispiele erfindungsgemäßer Auslässe in den Zonen A, B, C und D.

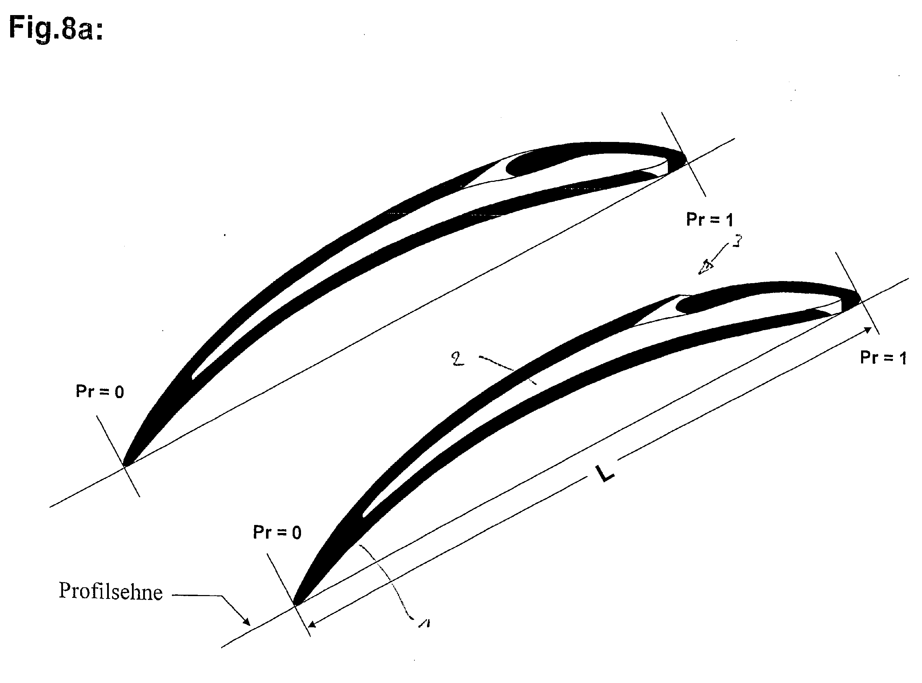

Die Fig.8a zeigt beispielhaft zwei erfindungsgemäße Anordnungen eines Hochauftriebsprofils mit Auslässen in den Bereichen A und E.

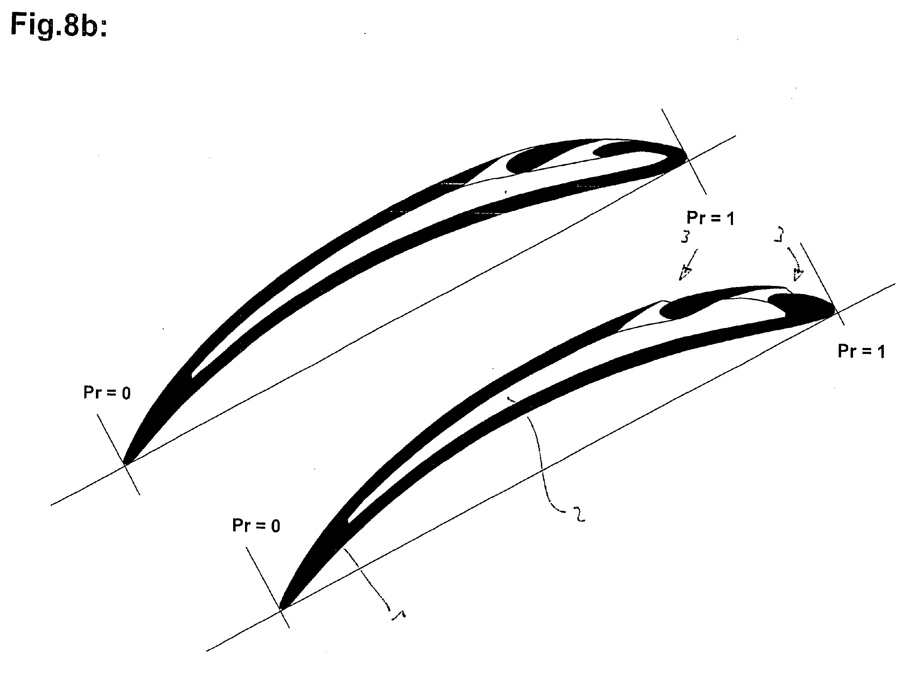

Die Fig.8b zeigt beispielhaft zwei erfindungsgemäße Anordnungen eines Hochauftriebsprofils mit zwei Auslässen auf der Saugseite, je einer angeordnet im Bereich A und B. Unabhängig von der Anordnung in den als erfindungsgemäß besonders günstig ausgewiesenen Bereichen A, B, C und D ist es gemäß der vorliegenden Erfindung insbesondere vorteilhaft, über einen Teil oder die Gesamtheit der Schaufelhöhe mindestens zwei Auslässe zur Tangentialstrahlerzeugung in Hauptströmungsrichtung bzw. in einem Stromlinienschnitt hintereinander anzuordnen.

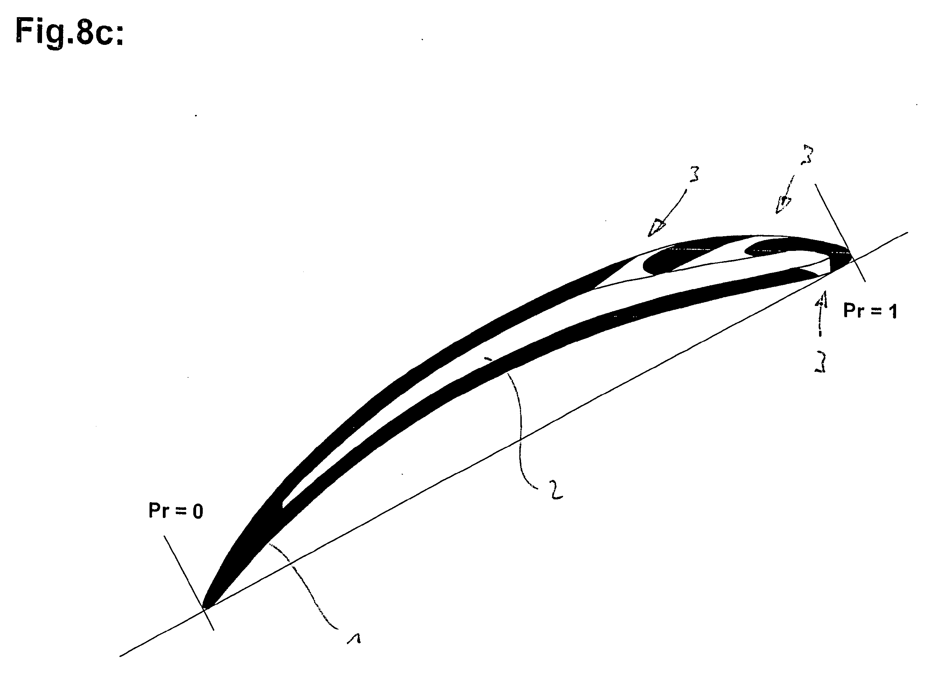

Die Fig.8c zeigt beispielhaft die erfindungsgemäße Anordnung eines Hochauftriebsprofils mit Auslässen in den Bereichen A, B und E.

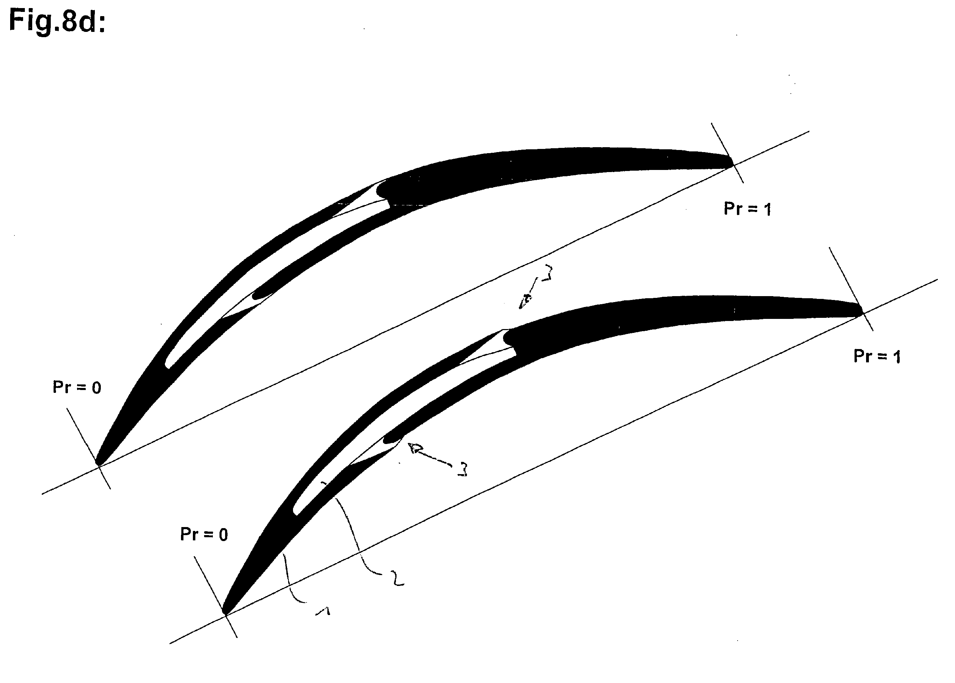

Die Fig.8d zeigt beispielhaft zwei erfindungsgemäße Anordnungen eines Hochauftriebsprofils mit je einem Auslass auf der Saugseite im Bereich A und auf der Druckseite im Bereich C. Unabhängig von der Anordnung in den als erfindungsgemäß besonders günstig ausgewiesenen Bereichen A, B, C und D ist es gemäß der vorliegenden Erfindung insbesondere vorteilhaft, über einen Teil oder die Gesamtheit der Schaufelhöhe mindestens je einen Auslass zur Tangentialstrahlerzeugung in Hauptströmungsrichtung bzw. in einem Stromlinienschnitt auf Saug- und Druckseite gleichzeitig anzuordnen.

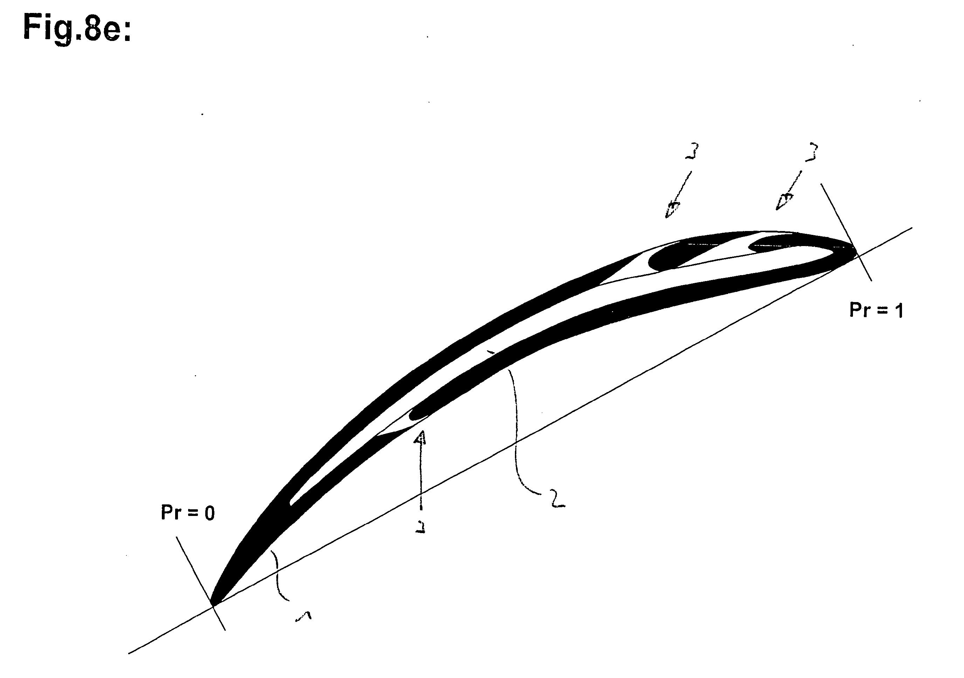

Die Fig.8e zeigt schließlich beispielhaft die erfindungsgemäße Anordnung eines Hochauftriebsprofils mit Auslässen in den Bereichen A, B und C.

Hinsichtlich der erfindungsgemäßen Gestaltung eines Auslasses in Richtung der Schaufelhöhe bzw. der Kanalweite W zeigt Fig.9a am Beispiel eines groß dargestellten Abschnittes einer Schaufel zwei unterschiedliche mögliche Anordnungen, gültig für die Zonen A, B, C, D. Hier nicht gezeigt, aber dennoch im erfindungsgemäßen Lösungsumfang enthalten, ist eine Anordnung mit einem sich über den betreffenden Teil der Schaufelhöhe (Kanalweite) erstreckenden durchgehenden Schlitz. Im Teil (a.) des Bildes ist eine komplexere erfindungsgemäße Konfiguration dargestellt, die mehrere nebeneinander vorgesehene, durch Stege oder Umlenkhilfen getrennte Teilschlitze umfasst. Der Auslass ermöglicht, je nach erfindungsgemäßer Detailgestaltung, eine Ausrichtung des Tangentialstrahls orthogonal (durchgezogene Pfeile in Fig. 9a) oder auch nicht-orthogonal (gestrichelte Pfeile in Fig. 9a) zur Auslasstrajektorie. Im Teil (b.) des Bildes ist eine weitere erfindungsgemäße Konfiguration dargestellt, die mehrere nebeneinander vorgesehene, durch Stege oder Umlenkhilfen getrennte Langlöcher umfasst. Der Abstand der Einzelöffnungen des Auslasses kann, wie hier dargestellt etwa gleichbleibend oder, wie hier nicht dargestellt, veränderlich entlang der Auslasstrajektorie gestaltet sein. Der Auslassabsatz kann, wie hier dargestellt durchgängig entlang der Auslasstrajektorie verlaufen oder, wie hier nicht dargestellt, unterbrochen und dementsprechend nur im Bereich der jeweiligen Einzelöffnungen des Auslasses ausgeprägt sein.

Als weitere erfindungsgemäße Gestaltung eines Auslasses in Richtung der Schaufelhöhe bzw. der Kanalweite W zeigt Fig.9b am Beispiel eines groß dargestellten Abschnittes einer Schaufel eine Anordnung, bei der mehrere Einzelauslässe entlang einer Auslasstrajektorie gedreht angeordnet sind, gültig für die Zonen A, B, C, D. Die Richtung des Tangentialstrahls verläuft auf diese Weise nicht-orthogonal zur Auslasstrajektorie und unter dem bereits bekannten Scherwinkel ϕ.

Die Fig.10 zeigt in einer frei festlegbaren Schnittebene durch die Schaufel die Merkmale eines erfindungsgemäßen Auslasses in Zone E. Die Merkmale des Komplementärauslasses werden mit Hilfe der Mittelpunkte MI und ME zweier dem Auslass einbeschriebenen Kreisen (Kreise selbst nicht eingezeichnet) und der Mittellinie des Auslasses in der einen hier betrachteten Ebene beschrieben. Zunächst wird von außerhalb der Schaufel kommend der engste Querschnitt des Auslasses gefunden. Der engste Querschnitt hat die Weite e, muss aber nicht, wie hier dargestellt, direkt an der Austrittsöffnung des Auslasses liegen. Der Mittelpunkt des im engsten Querschnitt gefundenen Kreises ist mit ME gekennzeichnet. Weiter in den Auslass hineingehend können zur Bestimmung der Mittellinie GML des Auslasses weitere kontinuierlich größer werdende Kreise einbeschrieben werden. Zwischen den Punkten ME und MI ergibt sich, in Richtung der Sehne des Profils gemessen, die effektive Erstreckung s des Auslasses. Zwischen dem Punkt ME und der Profilsehne findet sich die Hinterkantenvorsprungtiefe j. Zwischen der Richtung der Mittellinie GLM im Punkt ME und der Profilsehne liegt der Mündungswinkel γ.

Für die Gestalt des Komplementärauslasses gelten schließlich erfindungsgemäß folgende Festlegungen:
a.) der Engquerschnitt des Auslasses befindet sich an oder nahe der Auslassöffnung
b.) der Auslass besitzt vom Engquerschnitt ins Innere der Schaufel gehend eine über der gesamten effektive Erstreckung s kontinuierlich steigende Querschnittsweite (Düsenförmigkeit zwischen den Anfangs- und Endkreismittelpunkten MI und ME)
c.) die effektive Erstreckung s, bezogen auf die Engquerschnittsweite e, liegt im Wertebereich s/e > 0,7
d.) der zwischen den Tangenten TGO und TGA eingeschlossene Mündungswinkel γ liegt im Wertebereich 45° < γ < 135°
e.) die Hinterkantenvorsprungtiefe j, bezogen auf die Engquerschnittsweite e, liegt im Wertebereich 0 < j/e < 10

Hinsichtlich der erfindungsgemäßen Gestaltung eines Komplementärauslasses in Richtung der Schaufelhöhe bzw. der Kanalweite W zeigt Fig.11 am Beispiel eines groß dargestellten Hinterkantenbereiches einer Schaufel zwei unterschiedliche mögliche Anordnungen für die Zone E. Hier nicht gezeigt, aber dennoch im erfindungsgemäßen Lösungsumfang enthalten, ist eine Anordnung mit einem sich über den betreffenden Teil der Ringkanalweite (Schaufelhöhe) erstreckenden durchgehenden Schlitz. Im Teil (a.) des Bildes ist eine komplexere erfindungsgemäße Konfiguration dargestellt, die mehrere nebeneinander vorgesehene, durch Stege oder Umlenkhilfen getrennte Teilschlitze umfasst. Der Auslass ermöglicht, je nach erfindungsgemäßer Detailgestaltung, eine Ausrichtung des Strahls orthogonal (durchgezogene Pfeile in Fig. 11) oder auch nicht-orthogonal (gestrichelte Pfeile in Fig. 11) zur Auslasstrajektorie. Im Teil (b.) des Bildes ist eine weitere erfindungsgemäße Konfiguration dargestellt, die mehrere nebeneinander vorgesehene, durch Stege oder Umlenkhilfen getrennte Langlöcher umfasst. Der Abstand der Einzelöffnungen des Auslasses kann, wie hier dargestellt etwa gleichbleibend oder, wie hier nicht dargestellt, veränderlich entlang der Auslasstrajektorie gestaltet sein.

Die vorliegende Erfindung erlaubt eine deutlich höhere aerodynamische Belastbarkeit von Rotoren und Statoren in Strömungsarbeitmaschinen, bei gleichbleibendem oder erhöhtem Wirkungsgrad. Eine Reduzierung der Teilezahl und des Komponentengewichts von mehr als 20% scheint erreichbar. Bei Einsatz des Konzeptes im Hochdruckverdichter eines Flugtriebwerkes mit rund 25000 Pfund Schub ergibt sich eine Reduzierung des spezifischen Kraftstoffverbrauches von bis zu 0,5%.

## Patentansprüche

1. Strömungsarbeitsmaschinenschaufel mit zumindest einem in der Schaufel (1) angeordneten Hohlraum (2), welcher mit Mitteln zur Zufuhr von Fluid verbunden ist, sowie mit zumindest einer Auslassöffnung (3), welche den Hohlraum mit einem Strömungsweg verbindet, in welchem die Schaufel (1) angeordnet ist, **dadurch gekennzeichnet, dass** die Auslassöffnung (3) düsenartig ausgebildet und im Wesentlichen in Richtung einer längs einer zugeordneten Fläche der Schaufel (1) verlaufenden Hauptströmung geneigt ist,
- dass sich die Auslassöffnung (3) über zumindest einen Teil der Höhe der Schaufel (1) erstreckt, und
- dass die Auslassöffnung (3) einen Absatz in der Kontur des Profils der Schaufel (1) bildet, wobei sich ein aus der Auslassöffnung (3) austretender Fluidstrahl im Wesentlichen tangential an die Fläche anlegt.

2. Schaufel nach Anspruch 1, **dadurch gekennzeichnet, dass** sich die Auslassöffnung (3) über einen Teil der Höhe der Schaufel (1) erstreckt.

3. Schaufel nach Anspruch 1, **dadurch gekennzeichnet, dass** sich die Auslassöffnung (3) über die Gesamtheit der Höhe der Schaufel (1) erstreckt.

4. Schaufel nach Anspruch 1, **dadurch gekennzeichnet, dass** sich die Auslassöffnung (3) über einen Teil einer Weite eines Ringkanals, in welchem die Schaufel (1) angeordnet ist, erstreckt.

5. Schaufel nach Anspruch 1, **dadurch gekennzeichnet, dass** sich die Auslassöffnung (3) über die Gesamtheit einer Weite eines Ringkanals, in welchem die Schaufel (1) angeordnet ist, erstreckt.

6. Schaufel nach einem der Ansprüche 1 bis 5, **dadurch gekennzeichnet, dass** im Bereich des Auslasses mindestens ein Trennsteg vorgesehen ist, der den herangeführten Fluidstrom unterteilt und/oder umlenkt, bevor dieser als Tangentialstrahl auf die Fläche der Schaufel (1) austritt.

7. Schaufel nach einem der Ansprüche 1 bis 6, **dadurch gekennzeichnet, dass** im Bereich des Hohlraums mindestens ein Trennsteg vorgesehen ist, der den herangeführten Fluidstrom unterteilt und/oder umlenkt, bevor dieser als Tangentialstrahl auf die Fläche der Schaufel (1) austritt.

8. Schaufel nach einem der Ansprüche 1 bis 7, **dadurch gekennzeichnet, dass** die Auslassöffnung so ausgebildet ist, dass eine Strahlrichtung des austretenden Fluids am Ort der Auslassöffnung (3) mit der Richtung einer Haupt- bzw. Grenzschichtströmung am Profil der Schaufel (1) einen Scherwinkel ϕ einschließt, der Werte im Winkelbereich von -90° < ϕ < 90° aufweist.

9. Schaufel (1) nach einem der Ansprüche 1 bis 8, **dadurch gekennzeichnet, dass** die Ausgestaltung der Auslassöffnung (3) wie folgt festgelegt ist:
a.) der Engquerschnitt des Auslasses befindet sich an oder nahe der Auslassöffnung(3),
b.) der Auslass besitzt vom Engquerschnitt ins Innere der Schaufel gehend eine über der gesamten effektiven Länge k kontinuierlich steigende Querschnittsweite, entsprechend einer Düsenförmigkeit zwischen den Anfangs- und Endkreismittelpunkten MI und ME,
c.) die effektive Länge k, bezogen auf die Engquerschnittsweite e, liegt im Wertebereich k/e > 0,7
d.) der zwischen den Tangenten TGO und TGA eingeschlossene Mündungswinkel γ liegt im Wertebereich 0° < γ < 60°
e.) die Absatzhöhe f, bezogen auf die Engquerschnittsweite e, liegt im Wertebereich 0 < f/e < 3

10. Schaufel nach einem der Ansprüche 1 bis 9, **dadurch gekennzeichnet, dass** mindestens eine Auslassöffnung (3) zur Tangentialstrahlerzeugung wirksam im Bereich der relativen Profiltiefe 0,5 < Pr < 0,85 auf der Schaufelsaugseite vorgesehen ist.

11. Schaufel nach einem der Ansprüche 1 bis 10, **dadurch gekennzeichnet, dass** mindestens eine Auslassöffnung (3) zur Tangentialstrahlerzeugung wirksam im Bereich der relativen Profiltiefe 0,1 < Pr < 0,4 auf der Schaufeldruckseite vorgesehen ist.

12. Schaufel nach einem der Ansprüche 1 bis 9, **dadurch gekennzeichnet, dass** mindestens eine Auslassöffnung (3) zur Tangentialstrahlerzeugung wirksam im Bereich der relativen Profiltiefe 0,8 < Pr < 1,0 auf der Schaufelsaugseite vorgesehen ist.

13. Schaufel nach einem der Ansprüche 1 bis 12, **dadurch gekennzeichnet, dass** mindestens eine Auslassöffnung (3) zur Tangentialstrahlerzeugung wirksam im Bereich der relativen Profiltiefe 0,5 < Pr < 0,85 auf der Schaufeldruckseite vorgesehen ist.

14. Schaufel nach einem der Ansprüche 1 bis 13, **dadurch gekennzeichnet, dass** mindestens eine Auslassöffnung (3) zur Tangentialstrahlerzeugung auf der Schaufelsaugseite und gleichzeitig mindestens eine Auslassöffnung (3) zur Tangentialstrahlerzeugung auf der Schaufeldruckseite vorgesehen sind.

15. Schaufel nach Anspruch 14, **dadurch gekennzeichnet, dass** mindestens eine Auslassöffnung (3) saugseitig im Bereich der relativen Profiltiefe 0,5 < Pr < 0,85 und mindestens eine Auslassöffnung (3) druckseitig im Bereich der relativen Profiltiefe 0,1 < Pr < 0,4 vorgesehen sind.

16. Schaufel nach einem der Ansprüche 1 bis 14, **dadurch gekennzeichnet, dass** mindestens eine Auslassöffnung (3) saugseitig im Bereich der relativen Profiltiefe 0,8 < Pr < 1,0 und mindestens eine Auslassöffnung (3) druckseitig im Bereich der relativen Profiltiefe 0,5 < Pr < 0,85 vorgesehen sind.

17. Schaufel nach einem der Ansprüche 1 bis 16, **dadurch gekennzeichnet, dass** mindestens zwei Auslassöffnungen (3) zur Tangentialstrahlerzeugung auf der Schaufelsaugseite in Strömungsrichtung hintereinander vorgesehen sind.

18. Schaufel nach einem der Ansprüche 1 bis 17, **dadurch gekennzeichnet, dass** mindestens zwei Auslassöffnungen (3) zur Tangentialstrahlerzeugung auf der Schaufeldruckseite in Strömungsrichtung hintereinander vorgesehen sind.

19. Schaufel nach einem der Ansprüche 1 bis 18, **dadurch gekennzeichnet, dass** komplementär zu einer vorgesehenen Tangentialstrahlerzeugung mindestens eine weitere Auslassöffnung (3)im Bereich der Profilhinterkante angeordnet ist, die aufgrund ihrer Orientierung eine nicht-tangential zur Profilumströmung ausgerichtete Strahlerzeugung bewirkt.

20. Schaufel nach Anspruch 19, **dadurch gekennzeichnet, dass** mindestens eine Komplementärauslassöffnung wirksam im Bereich der relativen Profiltiefe 0,9 < Pr < 1,0 auf der Schaufeldruckseite vorgesehen ist.

21. Schaufel nach einem der Ansprüche 19 oder 20, **dadurch gekennzeichnet, dass** die Ausgestaltung der Komplementärauslassöffnung wie folgt festgelegt ist:
a.) der Engquerschnitt des Auslasses befindet sich an oder nahe der Auslassöffnung
b.) der Auslass besitzt vom Engquerschnitt ins Innere der Schaufel gehend eine über der gesamten effektive Erstreckung s kontinuierlich steigende Querschnittsweite (Düsenförmigkeit zwischen den Anfangs- und Endkreismittelpunkten MI und ME)
c.) die effektive Erstreckung s, bezogen auf die Engquerschnittsweite e, liegt im Wertebereich s/e > 0,7
d.) Der zwischen den Tangenten TGO und TGA eingeschlossene Mündungswinkel gamma liegt im Wertebereich 45° < gamma < 135°.
e.) die Hinterkantenvorsprungtiefe j, bezogen auf die Engquerschnittsweite e, liegt im Wertebereich 0 < j/e < 10

22. Schaufel nach einem der Ansprüche 1 bis 21, **dadurch gekennzeichnet, dass** mindestens eine Auslassöffnung (3)auf der Schaufeloberfläche eine Trajektorie besitzt, die durchgängig oder in Abschnitten mit der Kante des Auslassabsatzes übereinstimmt, insbesondere in Linienausrichtung.

23. Schaufel nach einem der Ansprüche 1 bis 21, **dadurch gekennzeichnet, dass** mindestens eine Auslassöffnung (3) auf der Schaufeloberfläche eine Trajektorie besitzt, die nur punktuell die Kante gedreht angeordneter Öffnungen berührt (gedrehte Ausrichtung).

24. Schaufel nach Anspruch 22 oder 23, **dadurch gekennzeichnet, dass** mindestens eine Auslassöffnung (3) entlang der Trajektorie mehrere durch Unterteilung entstandene Teilöffnungen umfasst, die rundlochartig, langlochartig, eckig oder schlitzartig ausgebildet sind und hinsichtlich Abstand und Form variabel gestaltet sein können.

25. Schaufel nach einem der Ansprüche 1 bis 24, **dadurch gekennzeichnet, dass** bei Aktivieren und Deaktivieren der Fluidversorgung mindestens einer Auslassöffnung (3) eine Steuerbarkeit der Abströmrichtung der Schaufelreihe mit einem Variationsbereich des Abströmwinkels von mehr als 5 Grad in mindestens einem Teilbereich der Ringkanalweite bzw. der Schaufelhöhe erzielt wird.

26. Schaufel nach einem der Ansprüche 1 bis 25, **dadurch gekennzeichnet, dass** die Schaufel in einer ersten Statorreihe hinter einem Fan (Bläser) eines Flugtriebwerkes im Kern- oder Nebenstrom angeordnet ist.

27. Schaufel nach einem der Ansprüche 1 bis 25, **dadurch gekennzeichnet, dass** es die Schaufel in einer Statorreihe eines mehrstufigen Hoch- oder Mitteldruckverdichters eines Flugtriebwerkes angeordnet ist.

28. Schaufel nach Anspruch 26 oder 27, **dadurch gekennzeichnet, dass** in Ringkanalmitte die Profiltiefe des Stators die Profiltiefe eines unmittelbar stromab oder stromauf befindlichen Rotors um mindestens 20% überschreitet.

29. Schaufel nach einem der Ansprüche 1 bis 28, **dadurch gekennzeichnet, dass** das Verhältnis von Ringkanalweite an der Schaufelvorderkante zu Profiltiefe in Ringkanalmitte kleiner 1 ist.
